# EUROPEAN PATENT SPECIFICATION

(11) **EP 1 572 703 B1**
(45) Date of publication and mention of the grant of the patent: **21.03.2007**
(21) Application number: 03813150.4
(22) Date of filing: 08.12.2003
(51) Int. Cl.: C07F 9/02, C09K 21/12, C08K 5/3492

(54) **PROCESS FOR THE PREPARATION OF A MELAMINE BASED FLAME RETARDANT AND POLYMER COMPOSITION**
VERFAHREN ZUR HERSTELLUNG EINER POLYMERZUSAMMENSETZUNG UND EINES FLAMMVERZÖGERUNGSMITTELS AUF MELAMINBASIS
PREPARATION D'UN RETARDATEUR DE FLAMME A BASE DE MELAMINE ET D'UNE COMPOSITION POLYMERE

(30) Priority: 18.12.2002 CN 02156367
(43) Date of publication of application: 14.09.2005
(73) Proprietor: Ciba Specialty Chemicals Holding Inc., 4057 Basel (CH)
(72) Inventor: WANG, Qi, Kehua Road, 610065 Chengdu, Sichuan (CN); CHEN, Yinghong, Sichuan University, 1, Yihuan Rd, 610065 Chengdu, Sichuan (CN); LIU, Yuan, Room 302, Dorm. 1, Nanyuan Res. Area, 610065 Chengdu, sichuan (CN); XU, Xi, 37, Part 2, Bldg 1, Nanyuan Res. Area, 610065 Chengdu, Sichuan (CN); XIA, Hesheng, 24, Part 1, Bldg 13, Xinbeicun, 1 Yihuan Rd, 610065 Chengdu, Sichuan (CN); HUA, Zhengkun, 25, Part 2, Bldg. 8, 18, Gonghecun, 1, Yihuan Road, 610065 Chengdu, Sichuan (CN)
(86) International application number: PCT/EP2003/050955
(87) International publication number: WO 2004/055029

(56) References cited:
- US-A- 4 010 137
- US-A- 4 140 856
- HALPERN Y ET AL: "Fire retardancy of thermoplastic materials by intumescence" INDUSTRIAL & ENGINEERING CHEMISTRY RESEARCH, AMERICAN CHEMICAL SOCIETY. WASHINGTON, US, vol. 23, no. 2, 1984, pages 233-238, XP000960807 ISSN: 0888-5885

## Description

The invention relates to a process for the preparation of a melamine based flame retardant by a reaction in an extruder between a melamine comprising compound and a polyol with the optional addition of a polymeric carrier material.

Such process is known from *US-A-4,010,137,* which discloses a process wherein melamine pyrophosphate and pentaerythritol are combined as single component flame retardants and heated in a vessel at 175°C - 275°C for 0.5 to 4 hours. Specific degassing conditions insure the incorporation of an effective amount of the flame retardant into the synthetic resin. No significant foaming is observed when the synthetic resin composition is subjected to moulding conditions. The resulting product is used especially for the preparation of flame retardants containing polypropylene. Furthermore, this publication teaches the need for stable melamine based flame retardants which can be moulded at temperatures up to 260°C. The reaction product of H₃PO₄, P₂O₅, dipentaerythritol and melamine is disclosed as a particularly stable flame retardant. This product can be moulded without foaming at a temperature up to 246°C. A clear disadvantage of the process as disclosed in this reference results from the fact that the preparation of the flame retardant requires a process time of at least 0.5 hours and up to 4 hours.

A process for the preparation of a melamine based flame retardant is disclosed in *WO 00*/*68337.* This reference discloses a process wherein powder blends comprising pentaerythritol and melamine phosphate are prepared. These powder blends, however, are strongly limited in their applicability for the manufacture of polymer compositions, which is caused by the fact that foaming occurs during the processing of the powder blend in the polymer, e.g. during the compounding or injection moulding.

A severe problem results from the fact that single component flame retardants that contain phosphoric ester groups are subject to hydrolysis. In the event that these flame retardant additives are blended with polymer materials, such as polypropylene, their moisture sensitivity causes considerable leaching of the flame retardant molecules from the polymer matrix resulting in reduced flame retardant efficiency of the polymer composition and decreased electrical insulation properties.

Various methods are known to increase the water resistance of polymeric flame retardant compositions. They include partial phosphorylation of polymers, such as polyvinyl acetate, encapsulation of polar flame retardant components, such as acid source APP particles with copolymer of vinyl pyrrolidone and comonomer, modification of flame retardants with surfactants (non-ionic or ionic) or the replacement of polyols (polar species) by other char formers, such as dialkyl tin oxide, dialkyl tin dialkoxide, or polyol(alkylcarbonate). Some of these methods are effective in improving the water resistance of the polymeric flame retardant compositions, but result in complex additional processes often accompanied by environmental processes.

An object of the present invention is to provide a faster process for the preparation of a melamine based flame retardant and its master batch with high flowability.

Another object of the invention is the preparation of polymeric flame retardant compositions of increased water resistance while preserving the flame retardant performance (UL94 V-0) and mechanical properties.

These objects are achieved by the process according to the present invention, which relates to a process for the preparation of a melamine based flame retardant by a reaction of a melamine comprising compound and a polyol.

The melamine based flame retardant obtainable by the process of the present invention is particularly suitable for producing flame retardant polymer compositions of high water resistance. Due to the higher thermal stability of the melamine-based flame retardant obtainable by the process of the present invention, the polymer composition can be moulded at higher temperatures as compared to the polymer compositions disclosed in *US-A-4,010,137.*

A flame retardant polymer composition comprising a mixture of a melamine comprising compound and pentaerythritol is disclosed in *US-A-4,632,946.* This reference only discloses polymer compositions that can be processed at melt temperatures up to 230°C, whereas at higher temperatures foaming will occur. This confirms the stability problem as already mentioned in *USA-4,010,137.*

A further advantage of the process of the invention is established by the fact that the melamine based flame retardant obtained exhibits a higher degree of stability than the melamine based flame retardant obtained according to the process as described in *US-A-4,010,137.* A composition comprising the flame retardant of Embodiment II of *US-A-4,010,137* has to be moulded below the temperature 232°C, in order to prevent foaming. The melamine-based flame retardant according to the process of the present invention does not show any foaming at temperatures up to 280°C.

The invention, therefore, also relates to a melamine based flame retardant obtainable by the process of the present invention.

The process according to the present invention that relates to a process for the preparation of a melamine based flame retardant by a reaction of a melamine comprising compound and a polyol is characterised in that the melamine comprising compound is selected from the group consisting of melamine phosphate, melamine pyrophosphate and melamine polyphosphate, the polyol is selected from the group consisting of pentaerythritol, dipentaerythritol and tripentaerythritol and the reaction is carried out by reactive extrusion in an extruder in a molar ratio of the melamine comprising compound to the polyol between 1.0 : 1.0 and 4.0 : 1.0 and that the reaction is performed at a temperature between 200 and 300°C.

In a preferred embodiment of the invention the melamine based flame retardant is prepared by reaction of melamine phosphate with pentaerythritol.

With the process of the invention a faster process for the preparation of the melamine based flame retardant is obtained within a short time period.

The melamine comprising compound, such as melamine phosphate used in the process according to the invention and the polyol, such as pentaerythritol, can be of any standard chemical quality. Preferably they are used in the form of a powder. Pentaerythritol in pure form melts at 260°C and in mixtures below 260°C. Preferably fine powder forms are used. The melamine phosphate or the other melamine comprising compounds and the pentaerythritol as well as the other polyols can be fed separately to the extruder or can be premixed with e.g. a high shear mixer. Preferably a premixed mixture is used. This reduces the necessity of the control of the amount of flows of the material.

In the process of the invention the melamine comprising compound, such as melamine phosphate, and the polyol, such as pentaerythritol, are reacted in an extruder. This process embodiment is referred to as reactive extrusion. Extruders, such as the ones routinely used in the polymer processing industry, e.g. mono or double screw extruders, are suitable for this purpose. A twin-screw extruder is particularly preferred for the handling of fine powders. In the process of the invention the extruder is equipped with a degassing device. Generally this degassing means is a port or opening in the extruder that is connected to a vacuum pump. In the extruder the melamine-based flame retardant is produced, which leaves the extruder through the die as an extrudate. The extrudate is cooled and shaped, preferably by cutting, into formed particles, preferably pellets.

In the process of the invention the melamine comprising compound and the polyol react to form a melamine phosphate-polyol condensate, whereby corresponding molar equivalents of water are released. The water leaves the extruder through the degassing device. In this application the melamine phosphate-pentaerythritol condensate is also referred to as the melamine based flame retardant.

The molar ratio of the melamine phosphate to pentaerythritol is in the range between about 1.0 : 1.0 and 4.0 :1.0. Preferably the molar ratio is chosen between about 2.0 : 1.0 and 2.4 : 1.0. Melamine based flame retardants of excellent stability are obtained. Most preferably, the molar ratio is about 2.2 : 1.0. In the context of the description of the invention thermal stability is defined as the degree of resistance against foaming upon heating of the melamine based flame retardant. For a more precise differentiation in thermal stability of flame retardant compositions physicochemical methods, such as thermo gravimetric analysis (TGA) and differential scanning calorimetry (DSC), can be used.

The reaction of the melamine comprising compound and the polyol to obtain the melamine based flame retardant can be performed at temperatures between about 100°C and 300°C. However, for a complete conversion the reaction must be performed at a temperature higher than 200°C.

The maximum temperature for the reaction is chosen below 300°C. Preferably, the reaction of melamine phosphate and pentaerythritol is carried out in a temperature range between 220°C and 280°C. Between 220°C and 280°C a good balance is obtained between the rate of reaction and the degradation of the reaction product melamine based flame retardant. More preferably, the reaction of the melamine phosphate and the pentaerythritol is conducted at a temperature between 240°C and 260°C. The thermal stability of the melamine based flame retardant produced in this temperature range is excellent.

The time period for reaction in the process of the present invention is, in general, between 1 and 20 minutes. It was found that 1 batch in the extruder at the particularly preferable temperature range of 240 - 260°C is sufficient for producing a non-foaming melamine based flame retardant In an alternative embodiment of the process, the extruder is fed once again with the melamine based flame retardant obtained. With 2 passages through the extruder the doubling of the residence and hence reaction time is achieved. Due to a longer reaction time period in the extruder an increased stability of the melamine based flame retardant obtained can be achieved. This difference in stability can be easily assessed by TGA, which method is described below. Furthermore, the time period for reaction can also be changed with other means, e.g. by adjusting the number of revolutions per minute of a screw in the extruder, or by using a so-called static mixer in the extruder. Foaming of the reaction product can be determined by applying the foaming test as described below.

It has been found advantageous to add polymer material to the extruder as a carrier resin in addition to the melamine comprising compound and the polyol. A more constant extruder output is achieved with less than 30 weight% of polymer present in the flame retardant composition, especially when the extruder operates at temperatures below 270°C. The amount of the polymer in general is kept low, e.g. between 5.0 - 30.0 weight, particularly between 5.0 - 20.0%, related to the total weight amount of the flame retardant composition. When exposed to water a flame retardant composition in the presence of suitable polymer material, such as polypropylene, has a higher resistance to water, which is desirable in protecting polymer material against erosion caused by the so-called leaching effect of the flame protecting agent, which in this case is the reaction product of melamine comprising compound phosphate and the polyol.

In a preferred embodiment of the invention the reaction of the melamine comprising compound and the polyol is carried out in the presence of a third component, particularly 5.0 to 20.0 weight% of a polymer.

In a particularly preferred embodiment of the invention the reaction of the melamine phosphate and pentaerythritol is carried out in the presence of 5.0 to 20.0 weight% of a polymer.

Any type of polymer material can be chosen that is suitable for melt processing at the extruder temperature, preferably at processing temperatures below 300°C. In general the polymer or carrier resin is chosen according to the polymer matrix material that needs flame retardation. Polyethylene is the first choice due to its large availability and easy processing properties, It has been found in this respect that through the use of high density polyethylene, HDPE, light coloured melamine based flame retardant pellets can be produced, which is advantageous for producing light coloured, flame retardant polymer compositions. In an alternative embodiment the use of polypropylene has been found advantageous. An acceptable colour of the flame retardant master batches is obtained, combined with high fluidity and excellent flame retardancy and mechanical properties of the composite material. Furthermore through the use of a polymer it is easier to obtain pellets of the melamine based flame retardant

Other polymers suitable for the polymer composition of the present invention are those polymers, which are processed at temperatures below 300°C and preferably below 280°C. An example of these polymers is a polyolefin, e.g. polypropylene (PP), either as homo-, co-or terpolymer.

A flame retardant composition comprising polypropylene as polymer material has a good thermal stability during processing. Its decomposing temperature is in agreement with the pyrolysis point of PP. No typical melt process, but a softening zone above 180°C is observed. The shaped particles can deform and flow when compounding with PP and easily obtain an effective blending and dispersing. In compounding the softening flame retardant composition can plasticise the PP resin melt A small amount of PP can also improve the flowability of the composition considerably. Therefore, a master batch product of flame retardant content as well as high flowability is obtained. The flame retardant particles can deform and arrange in the flow direction of the polymer melt to form a typical fiber structure.

A non-exhaustive list of additional polymer materials is listed here below:

Polymers containing styrene, such as HIPS (High impact polystyrene), polyamides, polyimides, polyesters, polycarbonates, epoxy resins, polyurethanes and mixtures and blends of these materials.

The polymer composition according to the invention can be produced by known techniques as e.g. extrusion, compounding or injection moulding. The amount of the melamine based flame retardant obtainable by the process of the present invention in the polymer composition depends on the required level of flame retardancy. This required level of flame retardancy varies per application. Generally, for electronic or construction applications different amounts are required. An amount of up to 30 weight% is sufficient for assuring flame retardancy in many applications. The flame retardant composition may comprise other additives or auxiliary materials to improve the properties of the composition against decomposition, discolouration or oxidation, e.g. colorants, pigments, thermal and UV-stabilisers, mould release agents, co-flame retardants, softeners, lubricants, antioxidants, flow-promoting agents, dispersing agents, fillers and reinforcing agents as normally used in the formulation of poly mer compositions.

Examples of coating compositions are pigment-filled alkyd resins, homo- or copolymers based on acrylates, urethanes, esters, epoxies or modifications thereof. Optionally these can be provided with the usual cross linkers. After curing of this coating composition a coating is formed. In those processes where the flame retardant compositions are incorporated into a liquid polymer, a polymer solution or a polymer dispersion, for example a coating composition, the choice of auxiliary material is determined by the solubility of the auxiliary material in said liquid polymer, polymer solution or polymer dispersion.

Suitable organic auxiliary materials are organic compounds, polymers or copolymers based on vinylpyrrolidone, vinyl acetate and vinyl caprolactam, or mixtures thereof. Also suitable are the above-mentioned polymers or copolymers or additional polymers or copolymers based on epoxides, urethanes, acrylates, esters, amides, stearates, olefins, cellulose derivatives or mixtures thereof. In the event that the compositions are prepared from aqueous slurry, water-soluble organic auxiliary materials are of advantage because they can easily be added to this slurry.

When the melamine based flame retardant obtainable by the process of the present invention is added to a liquid polymer, a polymer solution or a polymer dispersion, which contains water, the agglomerate is easily dispersible. Polyvinyl pyrrolidone, polyvinyl alcohol and polyvinyl caprolactam are easy to handle and can be used in a wide range of applications due to their good solubility in water.

The quantity of organic auxiliary material amounts to 0.1 to 10.0 wt%, relative to the total weight of the composition. If very high flame retardation requirements are to be met with the melamine based flame retardant obtainable by the process of the present invention, preferably 0.1 to 5.0 wt% is used, even more preferably 0.1-3.0 wt% relative to the total agglomerate.

It has been found that the advantages mentioned for melamine based flame retardant obtainable by the process of the present invention also apply to compositions of other flame retardant compounds, including halogen containing and halogen-free ones. However, preference is given to halogen-free flame retardant compounds, including triazine compounds, such as melamine, ammeline and/or ammelide, higher condensation products thereof, such as melam, melem and or melon, melamine derivatives, such as melamine salts, e.g. melamine phosphate salts, melamine acetate, melamine pyrophosphate salts, melamine polyphosphate and/or melamine ammonium polyphosphate salts; metal compounds, such as aluminium hydroxide, magnesium hydroxide, antimony trioxide, Sb₂O₅, zinc oxide, sodium antimonate, zinc stannate and/or zinc borate.

The flame retardant properties of the flame retardant composition as obtained by the process according to the present invention can be enhanced by the presence of additional compounds exerting a synergistic effect with the flame retardant composition, such as a charforming compound, optionally combined with a catalyst promoting the formation of char in the polymer composition. In general, any compounds capable of enhancing the flame-retardant properties by means of char formation are suitable, such as resinous polymers selected from the group consisting of phenolic, epoxy, polyurethane, novolak, melamine, alkyd, allyl, unsaturated polyester, silicone, urethane and acrylate resins, polyphenylene ether, polycarbonate, polyvinyl alcohol, poly(ethylene covinyl), starch or glucose.

Metal salts of tungstic acid, a complex oxide acid of tungsten and metalloids, salts of tin oxide, ammonium sulphamate and/or its dimer may be used as catalysts for promoting char formation.

The invention are further illustrated with the following, non-limiting examples and Comparative Experiments.

In the application examples reference is made to various test methods, which are explained below:
- LOI (Limiting Oxygen Index) value: is measured using an ATLAS Limiting Oxygen Index instrument on sheets of 120 mm (I) x 6.5 mm (b) x 3 mm (t) according to ASTM D2863-77. A higher LOI value indicates better flame retardancy;
- Flammability test is measured according the norm UL 94 HB. UL 94 contains the test procedure for the horizontally positioned solid plastic specimen in the form of rods. The dimensions of the rods are 127 mm (I) x 12.7 mm (b). The thickness(t) of the rods should correspond to the minimum for the intended application. Tensile test and elongation at break is performed according to ISO 527-1A;
- Impact test: the notched impact strength is measured using a XJ-40A Impact strength tester according to ISO 180 -A/U;
- Foaming test: is used for fast simulation of moulding and check of the stability of a product. In the foaming test an amount of sample is put in a beaker that is placed in an oven at a temperature of 280 °C for 30 minutes. Foaming is visually evaluated;
- TGA: thermo gravimetric analysis is performed with a Dupont 2100 thermal analyser. Samples are heated from room temperature at a rate of 20 °C/min, whereby the weight loss versus temperature is recorded.

### Example I: Preparation of a melamine based flame retardant using an extruder.

Melamine phosphate and pentaerythritol are premixed in a high shear mixer at a molar ratio of 2.2 : 1.0. The premix obtained is fed to a twin-screw extruder (o=30 mm; L/D=32; fitted with a vacuum degassing), which operates at a screw speed of 35 rpm. Additionally HDPE is fed to the extruder in a HDPE: premix ratio of 5: 20. The average temperature in the extruder is 250°C and the residence time is between 3 and 5 minutes, on average 4 minutes. The extrudate obtained is cut into pellets and subsequently dried. The pellets have a light colour. The stability of the pellets is determined with the foaming test and TGA. The results are summarised in Table 1. It can be seen that the melamine-based flame retardant is very stable since it does not show foaming at 280°C.

### Examples II-IV: Preparation of melamine based flame retardants, by several passes through an extruder.

The melamine based flame retardant as obtained in Example I is again fed to the twin-screw extruder and given the same treatment as described in Example I. A longer reaction time is obtained, which amounts to up to 16 minutes by passing the extruder 4 times. The following residence times are obtained:
Example II: 2 extruder passes: total residence time = 8 minutes
Example III: 3 extruder passes: total residence time = 12 minutes
Example IV: 4 extruder passes: total residence time =16 minutes

The stability of the pellets is determined by applying the foaming test and TGA. The results are summarised in Table 1. As in Example I the flame retardants as obtained according to these examples do not show foaming. Furthermore the TGA results show a lower weight loss of the product of Example IV, which reflects that the stability of the flame retardant is further increased upon longer total residence time.

Comparative Experiments A, B: Heating of melamine pyrophosphate and pentaerythritol at 250°C, according to Embodiment II of Table I in *US-A-4,010,137.*

Melamine pyrophosphate and pentaerythritol are premixed in a high shear mixer at a molar ratio of 2.2:1.0. The premix obtained is placed in a beaker that is heated in an oven at 250°C. The heating is conducted for 20 minutes (Comparative Experiment A) or for 40 minutes (Comparative Experiment B).
The stability of the obtained product is determined by applying the foaming test. The results are summarised in Table 1.

**Table 1: Stability Tests of melamine based flame retardants**

| Melamine based flame retardant Obtained according to | Reaction time at 250°C [minutes] | Foaming? | TGA* [wt%] |
|---|---|---|---|
| Example I | 4 | No | 7 |
| Example II | 8 | No | |
| Example III | 12 | No | |
| Example IV | 16 | No | 5 |
| Comparative Experiment A | 20 | Yes | |
| Comparative Experiment B | 40 | Yes | |

| | | | |
|---|---|---|---|
| *Weight loss in weight% at 300°C | | | |

Example V: The experimental conditions and procedures are the same as the ones applied in Example I except that the molar ratio of melamine phosphate and pentaerythritol is 1.6 : 1.0 and the additional carrier resin is polypropylene (PP) with a PP: premix ratio of 10:90.
Example VI: The experimental conditions and procedures are the same as the ones applied in Example V except that the additional carrier resin is high HIPS with a HIPS: premix ratio of 10:90.
Examples VII-IX: Preparation of a polymer composition comprising the melamine-based flame retardant according to the invention.
   A polymer composition based on polypropylene (PP, homopolymer, melt index 3.4 g/10 min [according to ISO 1133 (Procedure A) at 230°C, 2.16 kg] comprising the melamine based flame retardant as obtained according to Example V-VI and two anti-oxidants, is produced. The composition as defined in Table 2 is fed to a twin-screw extruder as described in Example I, which operates at 70 rpm and at a temperature of 190°C. The extrudate leaving the extruder is cooled in a water bath, cut into pellets and dried. The following polymer compositions are obtained:
Example VII: The flame retardant composition is prepared according to Example I.
Example VIII: The flame retardant composition is prepared according to Example V.
Example IX: The flame retardant polymer matrix is HIPS and the flame retardant used is prepared according to Example VI.

From these pellets test specimen are moulded at a temperature of 250°C. The moulding is performed without problems. No foaming or entrapped gas is found in the test specimen. Some properties of the specimen are evaluated and are summarised in Table 2. The tensile strength and impact strength is at the level of pure PP that has tensile strength and impact strength of 36.1 MPa and 45 l/m, respectively. Furthermore the LOI is increased from 17.5 for pure PP to 28 and the UL 94 level is increased from failure to V-O rating for the polymer composition.

Comparative Experiment C: Preparation of a polymer composition comprising a mixture of melamine phosphate and pentaerythritol.

A polymer composition is produced in a manner analogous to Example VII. As flame retardant a powder mixture of melamine phosphate and pentaerythritol (ratio 2.2: 1.0) is fed to the extruder together with the polypropylene. The test specimen is moulded analogous to the procedure as summarised in Example VII. During moulding foaming occurred. Furthermore, the mechanical properties are reduced, as can be seen in Table 2, as compared to pure PP that has a tensile strength of 36 MPa.

**Table 2: Polymer composition comprising melamine based flame retardant**

| Composition | Example VII | Example VIII | Example IX | Comparative Experiment C |
|---|---|---|---|---|
| PP Polymer | 74.4 | 77.2 | | 79.4 |
| HIPS polymer | | | 66.1 | |
| Reaction product melamine phosphate and penta-erythritol | 20.0 | 20.0 | 30.0 | |
| Carrier Resin | 5.0 (Poly-ethylene) | 2.2 (Poly-propylene) | 3.3 (HIPS) | |
| Mixture melamine phosphate and pentaerythritol | | | | 20 |
| Dilauryl thiodipropionate | 0.3 | 0.3 | 0.3 | 0.3 |
| Bis(2.4-dicumylphenyl pentaerythritoldiphosphate | 0.3 | 0.3 | 0.3 | 0.3 |
| Tensile Strength¹⁾ [Mpa] | 35.4 | 31.0 | | 27.7 |
| Impact Strength²⁾ [J/m] | | 44.0 | | |
| Elongation at Break³⁾ [%] | 6.1 | 100.0 | | 2.8 |
| LOI⁴⁾ [%] | 23 | 28 | 27 | 24 |
| UL 94 3.2 mm | Failure | V-0 | | Failure |

| | | | | |
|---|---|---|---|---|
| For pure PP polymer: ¹⁾36.1 Mpa, ²⁾45 J/m, ³⁾410%, ⁴⁾17.5%, ⁵⁾Failure | | | | |

## Claims

1. A process for the preparation of a melamine based flame retardant by a reaction of a melamine comprising compound and a polyol, **characterised in that** the melamine comprising compound is selected from the group consisting of melamine phosphate, melamine pyrophosphate and melamine polyphosphate, the polyol is selected from the group consisting of pentaerythritol, dipentaerythritol and tripentaerythritol and the reaction is carried out by reactive extrusion in an extruder in a molar ratio of the melamine comprising compound to the polyol is between 1.0 : 1.0 and 4.0 : 1.0 and that the reaction is performed at a temperature between 200 and 300°C.

2. A process according to claim 1, **characterised in that** the melamine based flame retardant is prepared by reaction of melamine phosphate with pentaerythritol,

3. A process according to claim 1, **characterised in that** the extruder is a twin-screw extruder.

4. A process according to any one of claims 1-3, **characterised in that** the reaction of the melamine comprising compound and the polyol is carried out in the presence of up to 30 weight% of a polymer.

5. A process according to claim 1, **characterised in that** the reaction of the melamine comprising compound and the polyol is carried out in the presence of 5 to 20 weight% of a polymer.

6. A process according to claim 4, **characterised in that** the polymer is selected from the group consisting of polyethylene, polypropylene and high impact polystyrene.

7. A process according to claim 6, **characterised in that** the polyethylene is high-density polyethylene.

## Patentansprüche

1. Verfahren zur Herstellung eines Flammschutzmittels auf Melaminbasis durch eine Reaktion einer Melamin umfassenden Verbindung und eines Polyols, **dadurch gekennzeichnet, dass** die Melamin umfassende Verbindung aus der Gruppe, bestehend aus Melaminphosphat, Melaminpyrophosphat und Melaminpolyphosphat, ausgewählt ist, das Polyol aus der Gruppe, bestehend aus Pentaerythrit, Dipentaerythrit und Tripentaerythrit, ausgewählt ist, und die Reaktion durch reaktive Extrusion in einem Extruder in einem Molverhältnis von der das Melamin umfassenden Verbindung zu dem Polyol zwischen 1,0 : 1,0 und 4,0 : 1,0 ausgeführt wird, und dass die Reaktion bei einer Temperatur zwischen 200 und 300°C erfolgt.

2. Verfahren nach Anspruch 1, **dadurch gekennzeichnet, dass** das auf Melamin-basierende Flammschutzmittel durch Reaktion von Melaminphosphat mit Pentaerythrit hergestellt wird.

3. Verfahren nach Anspruch 1, **dadurch gekennzeichnet, dass** der Extruder ein Doppelschneckenextruder ist.

4. Verfahren nach einem der Ansprüche 1-3, **dadurch gekennzeichnet, dass** die Reaktion der Melamin umfassenden Verbindung und des Polyols in Gegenwart von bis zu 30 Gewichtsprozent eines Polymers ausgeführt wird.

5. Verfahren nach Anspruch 1, **dadurch gekennzeichnet, dass** die Reaktion der Melamin umfassenden Verbindung und des Polyols in Gegenwart von 5 bis 20 Gewichtsprozent eines Polymers ausgeführt wird.

6. Verfahren nach Anspruch 4, **dadurch gekennzeichnet, dass** das Polymer aus der Gruppe, bestehend aus Polyethylen, Polypropylen und Polystyrol mit hoher Schlagfestigkeit, ausgewählt ist.

7. Verfahren nach Anspruch 6, **dadurch gekennzeichnet, dass** das Polyethylen Niederdruckpolyethylen ist.

## Revendications

1. Procédé de préparation d'un ignifuge à base de mélamine par la réaction d'un composé comprenant de la mélamine et d'un polyol, **caractérisé en ce qu'**on choisit le composé comprenant de la mélamine dans le groupe constitué du phosphate de mélamine, pyrophosphate de mélamine et polyphosphate de mélamine, on choisit le polyol dans le groupe constitué du pentaérythritol, dipentaérythritol et tripentaérythritol et on effectue la réaction par extrusion réactive dans une extrudeuse dans un rapport molaire du composé comprenant de la mélamine au polyol entre 1,0:1,0 et 4,0:1,0 et **en ce qu'**on effectue la réaction à une température entre 200 et 300 °C.

2. Procédé selon la revendication 1, **caractérisé en ce que** l'ignifuge à base de mélamine est préparé par réaction de phosphate de mélamine avec du pentaérythritol.

3. Procédé selon la revendication 1, **caractérisé en ce que** l'extrudeuse est une extrudeuse à vis double.

4. Procédé selon l'une quelconque des revendications 1 à 3, **caractérisé en ce que** la réaction du composé comprenant de la mélamine et le polyol est effectuée en présence de jusqu'à 30 % en poids d'un polymère.

5. Procédé selon la revendication 1, **caractérisé en ce que** la réaction du composé comprenant de la mélamine et le polyol est effectuée en présence de 5 à 20 % en poids d'un polymère.

6. Procédé selon la revendication 4, **caractérisé en ce que** le polymère est choisi dans le groupe constitué du polyéthylène, polypropylène et polystyrène à impact élevé.

7. Procédé selon la revendication 6, **caractérisé en ce que** le polyéthylène est du polyéthylène à haute densité.
